# NEUE EUROPÄISCHE PATENTSCHRIFT

(11) **EP 1 529 374 B2**
(45) Veröffentlichungstag und Bekanntmachung des Hinweises auf die Entscheidung über den Einspruch: **20.11.2013**
(45) Hinweis auf die Patenterteilung: 26.07.2006
(21) Anmeldenummer: 02752930.4
(22) Anmeldetag: 16.08.2002
(51) Int. Cl.: H04L 12/28

(54) **VERFAHREN UND SYSTEM FÜR GSM-AUTHENTIFIZIERUNG BEI WLAN-ROAMING**
METHOD AND SYSTEM FOR GSM AUTHENTICATION DURING WLAN ROAMING
PROCEDE ET SYSTEME D'AUTHENTIFICATION GSM POUR UNE ITINERANCE WLAN

(43) Veröffentlichungstag der Anmeldung: 11.05.2005
(73) Patentinhaber: Togewa Holding AG, 3000 Bern 32 (CH)
(72) Erfinder: STADELMANN, Toni, CH-3065 Bolligen (CH); KAUZ, Michael, CH-1012 Lausanne (CH)
(74) Vertreter: Buntz, Gerhard
(86) Internationale Anmeldenummer: PCT/CH2002/000452
(87) Internationale Veröffentlichungsnummer: WO 2004/017564

(56) Entgegenhaltungen:
- WO-A-01/76134
- WO-A-02/03730
- DE-A1- 10 043 203
- OSTROWSKI F: "ROAMING UND HANDOVER ZWISCHEN UMTS UNK FUNK-LAN" NTZ (NACHRICHTENTECHNISCHE ZEITSCHRIFT), VDE VERLAG GMBH. BERLIN, DE, Bd. 55, Nr. 6, 2002, Seiten 24-26, XP001124094 ISSN: 0027-707X

## Beschreibung

Die vorliegende Erfindung betrifft ein Verfahren und System für automatisches Roaming zwischen unterschiedlichen WLANs und/oder GSM/GPRS/UMTS-Netzwerken, bei welchem zur Authentifizierung ein mobiler IP-Node über eine drahtlose Schnittstelle innerhalb einer Basic Service Area eines WLANs bei einem Access Server Zugriff auf das WLAN fordert, wobei die Basic Service Area des WLAN ein oder mehrere dem Access Server zugeordnete Access Points umfasst, und der mobile IP-Node mittels einer auf einer SIM-Karte des mobilen IP-Nodes gespeicherte IMSI authentifiziert wird. Insbesondere betrifft die Erfindung ein Verfahren für mobile Nodes in heterogenen WLANS.

In den letzten Jahren ist weltweit die Zahl der Internetbenutzer und damit der dort angebotenen Information exponentiell gestiegen. Obwohl jedoch das Internet weltweit Zugang zu Informationen bietet, hat der Benutzer normalerweise keinen Zugang dazu, bis er nicht an einem bestimmten Netzzugang, wie z.B. im Büro, in der Schule, an der Universität oder zu Hause, angekommen ist. Das wachsende Angebot an IP-fähigen mobilen Geräten, wie z.B. PDAs, Mobilfunktelefonen und Laptops, beginnt unsere Vorstellung vom Internet zu verändern. Ein analoger Übergang von fixen Nodes in Netzwerken zu flexibleren Anforderungen durch erhöhte Mobilität hat eben erst begonnen. In der Mobilfunktelefonie z.B. zeigt sich diese Tendenz u.a. auch an neuen Standards wie WAP, GPRS oder UMTS. Um den Unterschied zwischen der momentanen Realität und den IP-Verbindungsmöglichkeiten der Zukunft zu verstehen, kann man sich als Vergleich die Entwicklung der Telefonie Richtung Mobilität in den letzten zwanzig Jahren vors Auge rufen. Der Bedarf im privaten wie auch im geschäftlichen Bereich nach weltweitem unabhängigem drahtlosen Zugriff auf LANs (z.B. in Flughäfen, Konferenzzentren, Messegeländen, Städten, etc., etc.) mit Laptops, PDAs etc. ist riesig. Die WLANs, basierend z.B. auf IP, bieten heute jedoch den Service nicht, wie er z.B. mit GSM/GPRS erzeugt wird, der ein freies Roaming der Benutzer erlauben würde. Diese Dienste müssten neben Sicherheitsmechanismen wie im GSM/GPRS ebenfalls Möglichkeiten zur Service Autorisierung und zum Billing, d.h. Verrechnen der beanspruchten Leistung etc., umfassen. Auf der anderen Seite wird ein solcher Dienst auch nicht von bestehenden GSM/GPRS Betreibern angeboten. Es ist aber nicht nur das Roaming zwischen verschiedenen WLANs wichtig. Durch den grossen Wachstum bei der Informationstechnologie mit WLANs (mit Zugriff auf Internet etc.) und dem ebenfalls grossen Wachstum in der Mobilfunktelefonie ist es sinnvoll, diese beiden Welten zu verknüpft. Erst die Verknüpfung der beiden Welten macht bei wireless LANs ein einfaches und automatisches Roaming möglich, wie es der Benutzer von der Mobilfunktechnologie gewohnt ist. Somit besteht der Bedarf nach Anbietern, die zwischen unterschiedlichen WLAN-Dienstanbietern und zwischen WLAN-Dienstanbietern und GSM/GPRS-Dienstanbietern ein standartübergreifendes Roaming ermöglichen.

Computernetze oder Local Area Networks (LAN) bestehen üblicherweise aus sog. Nodes, welche verbunden sind über physikalische Medien, wie z.B. Koaxialkabel, Twisted Pair oder optische Glasfaserkabel. Diese LANs werden auch als wired LANs (verdrahtete Festnetze) bezeichnet. In den letzten Jahren sind auch drahtlose LANs, sog. wireless LANs, immer populärer geworden (z.B. durch Entwicklungen wie das AirPort-System der Apple Computer, Inc. etc.). Wireless LANs sind speziell geeignet, um mobile Einheiten (Nodes), wie z.B. Laptops, Notebooks, PDAs (Personal Digital Assistant) oder Mobilfunkgeräte, insbesondere Mobilfunktelefone, mit einer entsprechenden Schnittstelle in ein lokales Computernetzwerk einzubinden. Die mobilen Nodes besitzen einen Adapter, welcher einen Sender/Empfänger sowie eine Kontrollkarte umfasst (wie z.B. Infrarot(IR)-Adapter oder einen Tieffrequenzradiowellen-Adapter). Der Vorteil von solchen mobilen Nodes ist, dass sie innerhalb der Reichweite des wireless LANs frei bewegt werden können. Die mobilen Nodes kommunizieren entweder direkt miteinander (Peerto-Peer wireless LAN) oder schicken ihr Signal an eine Basisstation, welche das Signal verstärkt und/oder weiterleitet. Die Basisstationen können ebenfalls Bridgefunktionen umfassen. Über solche Basisstationen mit Bridge-Funktionen, sog. Access Points (AP), können die mobilen Nodes des drahtlosen LAN auf ein wired LAN zugreifen. Typische Netzwerkfunktionen eines Access Points umfassen das Übertragen von Meldungen von einem mobilen Node zu einem anderen, das Senden von Meldungen vom wired LAN zu einem mobilen Node und das Übertragen von Meldungen eines mobilen Nodes auf das wired LAN. Die physikalische Reichweite eines AP wird Basic Service Area (BSA) genannt. Befindet sich ein mobiler Node innerhalb der BSA eines AP, kann er mit diesem AP kommunizieren, falls der AP ebenfalls innerhalb der Signal-Reichweite (Dynamic Service Area (DSA)) des mobilen Nodes liegt. Mehrere APs sind i.N. einem Access Server zugeordnet, der u.a. die Autorisierung der mobilen Nodes mittels einer Benutzerdatabank überwacht und verwaltet. Die gesamte Fläche, die von den APs eines Access Servers abgedeckt wird, wird als sog. Hot Spot bezeichnet. Mobile Nodes besitzen typischerweise eine Signalstärke von 100 mWatt bis zu einem Watt. Um das wireless LAN mit dem wired LAN zu verbinden, ist es für den AP wichtig zu bestimmen, ob eine bestimmte Meldung (information frame) auf dem Netz für einen Node bestimmt ist, der innerhalb des wired LAN oder innerhalb des wireless LAN liegt, und diese Information, falls notwendig, an den entsprechenden Node weiterzuleiten. Für diesen Zweck besitzen APs sog. Bridge-Funktionen, z.B. entsprechend dem Standard IEEE Std 802.1D-1990 "Media Access Control Bridge" (31-74 ff). Bei solchen Bridgefunktionen wird ein neuer mobiler Node im wireless LAN typischerweise in einer FDB (Filtering Database) des AP registriert, in dessen Reichweite der Node liegt. Bei jedem Information-Frame auf dem LAN vergleicht der AP die Zieladresse mit den Adressen (MAC-Adressen (Media Access Control Addresses)), welche er im FDB abgespeichert hat und sendet, verwirft oder überträgt den Frame auf das wired LAN bzw. auf das wireless LAN.

Bei mobiler Netzwerkbenutzung sollte ein bestehender IP-Zugriff von Applikationen auf dem mobilen Node nicht unterbrochen werden, wenn der Benutzer seinen Standort im Netzwerk ändert. Im Gegenteil sollten alle Verbindungs- und Schnittstellenänderungen z.B. bei einem Wechsel in unterschiedlichen Hot Spots, insbesondere unterschiedlichen Netzwerken (Ethernet, Mobilfunknetz, WLAN, Bluetooth etc.) automatisch und nicht interaktiv geschehen können, so dass der Benutzer davon nicht einmal Kenntnis zu haben braucht. Dies gilt auch z.B. während der Benutzung von Real-Time Applikationen. Wirkliches mobiles IP-Computing weist viele Vorteile basierend auf einem jederzeitigen stabilen Zugang zum Internet auf. Mit einem solchen Zugang lässt sich die Arbeit frei und unabhängig vom Schreibtisch gestalten. Die Anforderungen an mobile Nodes in Netzwerken unterscheidet sich aber von der eingangs erwähnten Entwicklung in der Mobilfunktechnik auf verschiedene Arten. Die Endpunkte im Mobilfunk sind gewöhnlich Menschen. Bei mobilen Nodes können aber Computerapplikationen Interaktionen zwischen anderen Netzteilnehmern ohne jegliches menschliches Zutun oder Eingreifen ausführen. Beispiele dazu finden sich in Flugzeugen, Schiffen und Automobilen zu Genüge. So kann insbesondere mobiles Computing mit Internet Zugriff zusammen mit anderen Applikationen wie z.B. in Kombination mit Positionsbestimmungsgeräten, wie dem satellitenbasierenden GPS (Global Positioning System) sinnvoll sein.

Eines der Probleme beim mobilen Netzwerkzugriff via Internet Protokoll (IP) ist, dass das IP-Protokoll, welches dazu benutzt wird, die Datenpakete von der Quelladresse (Source Address) zur Zieladresse (Destination Address) im Netz zu routen, sog. IP-Adressen (IP: Internet Protocol) benutzt. Diese Adressen sind einem festen Standort im Netzwerk zugeordnet, ähnlich wie die Telefonnummern des Festnetzes einer physikalischen Dose zugeordnet sind. Wenn die Zieladresse der Datenpakete ein mobiler Node ist, bedeutet das, dass bei jedem Netzwerkstandortwechsel eine neue IP-Netzwerkadresse zugeordnet werden muss, was den transparenten, mobilen Zugriff verunmöglicht. Diese Probleme wurden durch den Mobile IP Standart (IETF RFC 2002, Okt. 1996) der Internet Engineering Task Force (IETF) gelöst, indem das Mobile IP dem mobilen Node erlaubt, zwei IP-Adressen zu benutzen. Die eine davon ist die normale, statische IP-Adresse (Home-Adresse), die den Ort des Heimnetzes angibt, während die zweite eine dynamische IP Care-Of-Adresse ist, die den aktuellen Standort des mobilen Nodes im Netz bezeichnet. Die Zuordnung der beiden Adressen erlaubt es, die IP-Datenpakete an die richtige, momentane Adresse des mobilen Nodes umzuleiten.

Eine der häufigst verwendeten Protokolle zur Authentifizierung eines Benutzers in einem wireless LAN ist das opensource Protokoll IEEE 802.1x (in der aktuellen Version 802.11) der Institute of Electrical and Electronics Engineers Standards Association. Die IEEE 802.1x Authentifizierung erlaubt den authentifizierten Zugriff auf IEEE 802 Medien, wie z.B. Ethernet, Tokenring und/oder 802.11 wireless LAN. Das 802.11 Protokoll erzeugt für wireless LAN, d.h. für drahtlose, lokale Netzwerke, eine 1 Mbps, 2 Mbps oder 11 Mbps Übertragung im 2.4 GHz Band, wobei entweder FHSS (Frequency Hopping Spread Spectrum) oder DSSS (Direct Sequence Spread Spectrum) benutzt wird. 802.1x unterstützt zur Authentifizierung EAP (Extensible Authentication Protocol) und TLS (Wireless Transport Layer Security). 802.11 unterstützt ebenfalls RADIUS. Obwohl die RADIUS-Unterstützung bei 802.1x optional ist, ist zu erwarten, dass die meisten 802.1x Authenticators RADIUS unterstützen werden. Das IEEE 802.1x Protokoll ist ein sog. Port-basierendes Authentifizierungsprotokoll. Es kann in jeder Umgebung verwendet werden, in welcher ein Port, d.h. eine Interface eines Gerätes, bestimmt werden kann. Bei der Authentifizierung basierend auf 802.1 x können drei Einheiten unterschieden werden. Das Gerät des Benutzers (SupplicantlClient), den Authenticator und den Authentifikationsserver. Der Authenticator ist dafür zuständig, den Supplicant zu authentifizieren. Authenticator und Supplicant sind beispielsweise über ein Point-to-Point LAN Segment oder eine 802.11 wireless Link verbunden. Authenticator und Supplicant besitzen einen definierten Port, eine sog. Port Access Entity (PAE), die einen physikalischen oder virtuellen 802.1x Port definiert. Der Authentifikationsserver erzeugt die vom Authenticator benötigten Authentifikationsdienste. So verifiziert er die vom Supplicant gelieferten Berechtigungsdaten bezüglich der beanspruchten Identität.

Die Authentifikationsserver basieren meistens auf RADIUS (Remote Authentication Dial-In User Service) der IETF (Internet Engineering Task Force). Die Benutzung des RADIUS Authentifizierungsprotokoll und Accountsystems ist weit verbreitet bei Netzwerkeinheiten, wie z.B. Router, Modemserver, Switch etc. und wird von den meisten Internet Service Providern (ISP) benutzt. Wählt sich ein Benutzer bei einem ISP ein, muss er normalerweise einen Benutzernamen und ein Passwort eingeben. Der RADIUS-Server überprüft diese Information und autorisiert den Benutzer zum ISP-System. Der Grund für die Verbreitung von RADIUS liegt u.a. darin, dass Netzwerkeinheiten im allgemeinen nicht mit einer sehr grossen Anzahl Netzbenutzer mit jeweils unterschiedlicher Authentifizierungsinformation umgehen können, da dies z.B. die Speicherkapazität der einzelnen Netzwerkeinheiten übersteigen würde. RADIUS erlaubt die zentrale Verwaltung von einer Vielzahl von Netzwerkbenutzern (Hinzufügen, Löschen von Benutzern etc.). So ist das z.B. bei ISP (Internet Service Providern) eine notwendige Voraussetzung für ihren Dienst, da ihre Benutzeranzahl häufig mehrere tausend bis mehrere zehntausend Benutzer umfasst. RADIUS erzeugt weiter einen bestimmten permanenten Schutz vor Hackern. Die Remoteauthentifizierung von RADIUS basierend auf TACACS+ (Terminal Access Controller Access Control System+) und LDAP (Lightweight Directory Access Protocol) ist gegen Hacker relativ sicher. Viele andere Remote Authentifizierungsprotokolle haben dagegen nur einen zeitweisen, ungenügenden oder gar keinen Schutz vor Hackerangriffen. Ein andere Vorteil ist, dass RADIUS zurzeit der de-facto Standard für Remote Authentifizierung ist, womit RADIUS auch von fast allen Systemen unterstützt wird, was bei anderen Protokollen nicht der Fall ist.

Das oben erwähnte Extensible Authentication Protocol (EAP) ist eigentlich eine Erweiterung zum PPP (Point-to-Point Protocol) und ist definiert durch das Request for Comments (RFC) 2284 *PPP Extensible Authentificafion Protocol (EAP)* der IETF. Mittels PPP lässt sich ein Computer z.B. an den Server eines ISP anbinden. PPP arbeitet im Data Link Layer des OSI Model und schickt die TCP/IP-Packete des Computers an den Server des ISP, der das Interface zum Internet bildet. Im Gegensatz zum älteren SLIP Protokoll (Serial Line Internet Protocol) arbeitet PPP stabiler und besitzt Fehlerkorrekturen. Das Extensible Authentication Protocol ist ein Protokoll auf einem sehr allgemeinen Level, das die verschiedensten Authentifizierungsverfahren unterstützt, wie z.B. Token Cards, Kerberos des Massachusetts Institute of Technology (MIT), Streichlisten-Passwörter, Zertifikate, Public Key Authentication und Smartcards oder sog. Integrated Circuit Cards (ICC). IEEE 802.1x definiert die Spezifikationen, wie EAP in die LAN-Frames intergriert sein müssen. Bei Kommunikation in drahtlosen Netzwerken mittels EAP verlangt ein Benutzer über die drahtlose Kommunikation bei einen Access Point (AP), d.h. eines Verbindungs-HUP für den Remote Access Client oder Supplicant zum WLAN, Zugriff auf das wireless LAN. Der AP fordert darauf vom Supplicant die Identifikation des Benutzers und übermittelt die Identifikation an den oben genannten Authentifikationsserver, der z.B. auf RADIUS basiert. Der Authentifikationsserver lässt den Access Point die Identifikation des Benutzers rücküberprüfen. Der AP holt sich diese Authentifizierungsdaten vom Supplicant und übermittelt diese an den Authentifikationsserver, der die Authentifizierung beendet.

Bei EAP erzeugt ein beliebiges Authentifizierungsverfahren eine Remote Access Verbindung. Das genaue Authentifikationsschema wird jeweils zwischen dem Supplicant und dem Authenticator (d.h. dem Remote Access Server, dem Internet Authentification Service (IAS) Server bzw. bei WLAN dem Access Point) festgelegt. Wie oben erwähnt, unterstützt EAP dabei viele unterschiedliche Authentifikationsschemata, wie z.B. generische Token Card, MD5-Challenge, Transport Level Security (TLS) für Smartcards, S/Key und mögliche zukünftige Authentifizierungstechnologien. EAP erlaubt eine von der Anzahl nicht beschränkte Frage-Antwort-Kommunikation zwischen Supplicant und Authenticator, wobei der Authenticator bzw. der Authentifikationsserver spezifische Authentifizierungsinformation verlangt und der Supplicant, d.h. der Remote Access Client antwortet. Beispielsweise kann der Authentifikationsserver über den Authenticator bei den sog. Security Token Cards einzeln zuerst einen Benutzernamen, dann eine PIN (Personal Identity Number) und schlussendlich einen Token Card Value vom Supplicant verlangen. Bei jedem Frage-Antwort-Durchgang wird dabei ein weiterer Authentifizierungslevel durchgeführt. Werden alle Authentifizierungslevel erfolgreich beantwortet, ist der Supplicant authentifiziert. Ein spezifisches EAP Authentifikationsschema wird als EAP-Typ bezeichnet. Beide Seiten, d.h. Supplicant und Authenticator müssen den gleichen EAP-Typ unterstützen, damit die Authentifizierung durchgeführt werden kann. Wie erwähnt, wird dies zu Beginn zwischen Supplicant und Authenticator festgelegt. Authentifikationsserver basierend auf RADIUS unterstützen im Normalfall EAP, was die Möglichkeit gibt, EAP-Meldungen an einen RADIUS-Server zu schicken.

Im Stand der Technik sind ebenfalls EAP-basierende Verfahren zur Authentifizierung eines Benutzers und zur Vergabe von Sessions Keys an den Benutzer mittels des GSM Subscriber Identity Modul (SIM) bekannt. Die GSM Authentifizierung basiert auf einem Frage-Antwort-Verfahren, einem sog. Challenge-Response Verfahren. Dem Authentifikationsalgorithmus der SIM-Karte wird als Challenge (Frage) eine 128-bit Zufallszahl (üblicherweise bezeichnet als RAND) gegeben. Auf der SIM-Karte läuft dann ein für den jeweiligen Operator spezifischen, vertraulichen Algorithmus, der als Input die Zufallszahl RAND und einen geheimen, auf der SIM-Karte gespeicherten Schlüssel Ki erhält und daraus eine 32-bit Antwort (SRES) und ein 64-bit Schlüssel Kc generiert. Kc ist zur Verschlüsslung des Datentransfers über drahtlose Schnittstellen gedacht (GSM Technical Specification GSM 03.20 (ETS 300 534): "Digital cellular telecommunication system (Phase 2); Security related network functions", European Telecommunications Standards Institute, August 1997). Bei der EAP/SIM Authentifizierung werden mehrere RAND Challenge zum Generieren von mehreren 64-bit Kc Schlüsseln verwendet. Diese Kc-Schlüssel werden zu einem längeren Session Key kombiniert. Mit EAP/SIM erweitert das normale GSM Authentifizierungsverfahren, indem die RAND-Challenges zusätzlich einen Message Authentification Code (MAC) besitzen, um gegenseitige Authentifizierung zu erzeugen. Um die GSM-Authentifizierung durchzuführen, sollte der Authentifikationsserver ein Interface zum GSM-Netzwerk besitzen. Der Authentifikationsserver arbeitet folglich als ein Gateway zwischen Internet Authentification Service (IAS) Server Netzwerk und der GSM Authentifikationsinfrastruktur. Zu Beginn der EAP/SIM Authentifizierung verlangt der Authentifikationsserver mit einem ersten EAP-Request durch den Authenticator vom Supplicant u.a. die International Mobile Subscriber Identity (IMSI) des Benutzers. Mit der IMSI erhält der Authentifikationsserver auf Anfrage vom Authentifikationszenter (AuC) des entsprechenden Mobilfunknetz-Dienstanbieter, üblicherweise im GSM-Netzwerk als Home Location Register (HLR) bzw. Visitor Location Register (VLR) bezeichnet, n GSM Triplets. Von den Triplets erhält der Authentifikationsserver ein Message Authentification Code für n*RAND und eine Lebensdauer für den Schlüssel (zusammen MAC_RAND) sowie einen Session Schlüssel. Mit diesen kann der Authentifikationsserver die GSM-Authentifizierung auf der SIM-Karte des Supplicant bzw. des Benutzers durchführen. Da RAND zusammen mit dem Message Authentification Code MAC_RAND an den Supplicant gegeben wird, wird es für den Supplicant möglich zu überprüfen, ob die RANDs neu sind und durch das GSM-Netzwerk generiert wurden.

Weiterhin offenbart die WO 01 76134 A (NOKIA CORP.) 11.10.2001 ein Verfahren zur Authentifikation eines mobilen Knotens in einem Paketdatennetz.

Der Stand der Technik hat jedoch verschiedenste Nachteile. Zwar ist es möglich, z.B. mit einer EAP-SIM Authentifizierung die Authentifizierungsverfahren von den GSM-Netzwerken in der wireless LAN-Technologie zur Authentifizierung von Supplicants bzw. Remote Access Clients zu verwenden, vorausgesetzt der Benutzer besitzt eine IMSI bei einem GSM Dienstanbieter. Ebenso ist es prinzipiell möglich, mittels z.B. Mobile IP der IETF (Internet Engineering Task Force) Datenströme zum entsprechenden bei einem Access Servers über einen Access Point angemeldeten mobilen Remote Access Client umzuleiten (routen). Damit sind jedoch bei weitem nicht alle Probleme der mobilen Netzwerkbenutzung gelöst, welche ein wirklich freies Roaming des Benutzers erlauben würden. Eines der Probleme ist, dass im IP-Netzwerk die im GSM Standart benötigten Voraussetzungen bezüglich Sicherheit, Billing und Service Autorisierung nicht mehr gegeben ist. Dies hängt intrinsisch mit der offenen Architektur des IP-Protokolles zusammen. D.h., viele Informationen fehlen im IP-Standard, die zur vollen Kompatibilität mit den GSM-Netzwerken unbedingt benötigt werden. Zudem liefert ein Access Server beruhend z.B. auf RADIUS ein einzelner Datenstrom. Dieser kann nicht ohne weiteres auf den mehrteiligen Datenstrom des GSM-Standards gemappt werden. Ein anderer Nachteil des Standes der Technik ist, dass wireless LAN heute auf individuellen Hot Spots (d.h. der Basic Service Area der Access Points eines Access Servers) beruhen, die von unterschiedlichen Software- und Hardwareentwicklem der ganzen Welt angeboten werden. Dies erschwert die Zusammenführung beider Welten, da solche Gateway-Funktionen jeweils an die spezifische Lösung angepasst werden müssen. Die technischen Spezifikationen zum GSM Authentifikations-Interface könne in MAP (Mobile Application Part) GSM 09.02 Phase 1 Version 3.10.0 gefunden werden.

Es ist eine Aufgabe dieser Erfindung, ein neues Verfahren für mobile Nodes in heterogenen WLANs vorzuschlagen. Insbesondere soll einem Benutzer ermöglicht werden, problemlos sich zwischen verschiedenen Hot Spots zu bewegen (roaming), ohne dass er sich um Anmeldung, Billing, Service Autorisation etc. bei den verschiedenen WLAN-Dienstanbietern bemühen müsste, d.h. den gleichen Komfort geniesst, wie er es von der Mobilfunktechnologie , wie z.B. GSM, gewohnt ist. Die Erfindung soll die benötigten Komponenten für Billing, Service Autorisierung und Sicherheit für den Benutzer und Serviceanbieter in WLANs sicherstellen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zwischen heterogenen WLANs und/oder GSM/GPRS/UMTS-Netzwerken zur Authentifizierung ein mobiler IP-Node über eine drahtlose Schnittstelle innerhalb einer Basic Service Area eines WLANs bei einem Access Point Zugriff auf das WLAN fordert, welche Basic Service Area des WLAN einen oder mehrere einem Access Server zugeordnete Access Points umfasst, dass der mobile IP-Node auf einen Request des Access Servers eine auf einer SIM-Karte des mobilen IP-Nodes gespeicherte IMSI an den Access Server übermittelt und dass mittels eines SIM-RADIUS-Moduls die IMSI des IP-Nodes gespeichert wird, wobei basierend auf der IMSI mittels von in einer SIM-Benutzerdatenbank abgespeicherten Informationen der logische IP-Datenkanal des WLAN zu entsprechenden GSM-Daten für Signal- und Datenkanäle eines GSM-Netzwerkes benutzerspezifisch ergänzt wird, wobei mittels eines SIM-Gateway-Moduls zur Durchführung der Authentifizierung des IP-Nodes basierend auf den GSM-Daten die notwendigen SS7/MAP-Funktionen (Authentifikation und/oder Autorisation und/oder Konfigurationsinformationen) generiert werden, wobei das SIM-RADIUS-Modul mittels SIM-Benutzerdatenbank und SIM-Gateway-Moduls die Authentifizierung des mobilen IP-Nodes basierend auf der IMSI der SIM-Karte des mobilen Nodes bei einem HLR und/oder VLR eines GSM-Netzwerkes durchführt, und wobei bei erfolgreicher Authentifizierung ein Location Update sowie eine Service Autorisierung beim HLR und/oder VLR durchgeführt wird und der mobile IP-Node in einer Customer Database des Access Servers einen entsprechenden Eintrag erhält, wobei das WLAN zur Benutzung durch den mobilen IP-Node freigegeben wird. Bei erfolgreicher Authentifizierung kann als Ausführungsvariante zusätzlich zum Location Update beim HLR und/oder VLR eine Autorisierung des mobilen IP-Nodes durchgeführt werden, wobei beim HLR und/oder VLR ein entsprechendes Benutzerprofil basierend auf der IMSI heruntergelanden wird. D.h. die Service Autorisierung des Benutzers basiert auf der Abfrage des entsprechenden Benutzerprofils (Enduserprofil) beim HLR und/oder VLR. Das Genannte hat u.a. den Vorteil, dass ein automatisches Roaming zwischen unterschiedlichen und heterogenen WLANs und GSM-Netzwerken möglich wird. Durch das Verbinden der WLAN-Technologie, insbesondere der IP-Netzwerke, mit der GSM-Technologie wird das Roaming des Benutzers möglich, ohne dass er sich um Anmeldung, Billing, Service Autorisation etc. bei den verschiedenen WLAN-Dienstanbietern bemühen müsste, d.h., dass der Benutzer den gleichen Komfort geniesst, wie er es von der Mobilfunktechnologie, wie z.B. GSM, gewohnt ist. Gleichzeitig ist es auf eine völlig neue Art möglich, die Vorteile der offenen IP-Welt (Zugang zum weltweiten Internet etc.) mit den Vorteilen des GSM-Standards (Sicherheit, Billing, Service Autorisation etc.) zu verbinden. Die Erfindung erlaubt auch ein Verfahren für ein Roaming in WLANs zu erzeugen, ohne dass bei jedem Access Server in entsprechendes Modul eingebaut werden müsste. Im Gegenteil kann die Infrastruktur (WLAN/GSM) durch die Verwendung von RADIUS unverändert übernommen werden.

In einer Ausführungsvariante wird für die Authentifizierung des mobilen IP-Nodes die auf der SIM-Karte des mobilen IP-Nodes gespeicherte IMSI nur bis zu einem oder mehreren der ersten Authentifikationsschritte benutzt und bei allen weiteren Authentifikationsschritten die IMSI durch eine generierte temporäre IMSI (TIMSI) ersetzt wird. Dies hat u.a. den Vorteil, dass die Sicherheit während der Authentifikation bzw. Autorisation erhöht werden kann.

In einer Ausführungsvariante wird die Authentifizierung des mobilen IP-Nodes mittels Extensible Authentication Protocol durchgeführt. Dies hat u.a. den Vorteil, dass in Kombination mit RADIUS ein vollständig Hardware und Hersteller (Vendor) unabhängiges Verfahren erzeugt wird. Insbesondere bietet EAP die notwendigen Sicherheitsmechanismen zur Durchführung der Authentifizierung.

In einer Ausführungsvariante wird der Datenstrom des mobilen IP-Nodes beim Zugriff auf das WLAN vom Access Point über einen Mobilfunknetzdienstanbieter geleitet. Dies hat u.a. den Vorteil, dass der Mobilfunknetzdienstanbieter vollständige Kontrolle über den Datenfluss hat. So kann er spezifisch Service Autorisationen vergeben, detailliertes Billing durchführen, Sicherheitsmechanismen einbauen und/oder personalisierte Dienste anbieten. U.a. kann er damit die offene, schwierig zu kontrollierende IP-Welt mit beispielsweise dem Internet, mit den Vorteilen der GSM-Welt verbinden. Dies spielt gerade in neuerer Zeit z.B. bezüglich Haftungsfragen des Providers oder Dienstanbieters eine grosse Rolle.

In einer anderen Ausführungsvariante erteilt der Mobilfunknetzdienstanbieter basierend auf der Authentifizierung mittels der IMSI die entsprechende Service Autorisierung zur Benutzung unterschiedlicher Dienste und/oder führt das Billing der beanspruchten Leistung durch. Diese Ausführungsvariante hat u.a. die gleichen Vorteile wie die vorhergehende Ausführungsvariante.

In einer weiteren Ausführungsvariante ist die SIM-Benutzerdatenbank mit einer Sync-Datenbank zum Verändern oder Löschen von bestehenden Benutzerdatensätzen oder zum Einfügen neuer Benutzerdatensätze verbunden, wobei der Abgleich der Datenbanken periodisch durchgeführt wird und/oder durch Veränderungen der Sync-Datenbank und/oder durch Ausfall der SIM-Benutzerdatenbank ausgelöst wird. Dies hat den Vorteil, dass die Mobilfunknetzbetreiber zum Verändern oder Löschen von bestehenden Benutzerdatensätzen oder zum Einfügen neuer Benutzerdatensätze in gleicher Weise verfahren können wie bisher mit ihren Benutzerdatenbanken, dass heisst, ohne dass sie zusätzliche Systeme kaufen oder warten müssten.

In einer Ausführungsvariante werden mittels eines Clearing-Moduls für das Billing die Billing-Records der heterogenen WLANs mit den Benutzerdaten synchronisiert und basierend auf dem GSM-Standard TAP aufbereitet. Dies hat u.a. den Vorteil, dass Dienstabieter ohne Modifikation ihrer Software und/oder Hardware das vom GSM-Standard gewohnte Clearing- und Billingverfahren verwenden können. Insbesondere erfolgt damit auch die restliche Aufschlüsselung des IP-Datenstroms in einen GSM-Datenstrom.

An dieser Stelle soll festgehalten werden, dass sich die vorliegende Erfindung neben dem erfindungsgemässen Verfahren auch auf ein System zur Ausführung dieses Verfahrens bezieht.

Nachfolgend werden Ausführungsvarianten der vorliegenden Erfindung anhand von Beispielen beschrieben. Die Beispiele der Ausführungen werden durch folgende beigelegten Figuren illustriert:

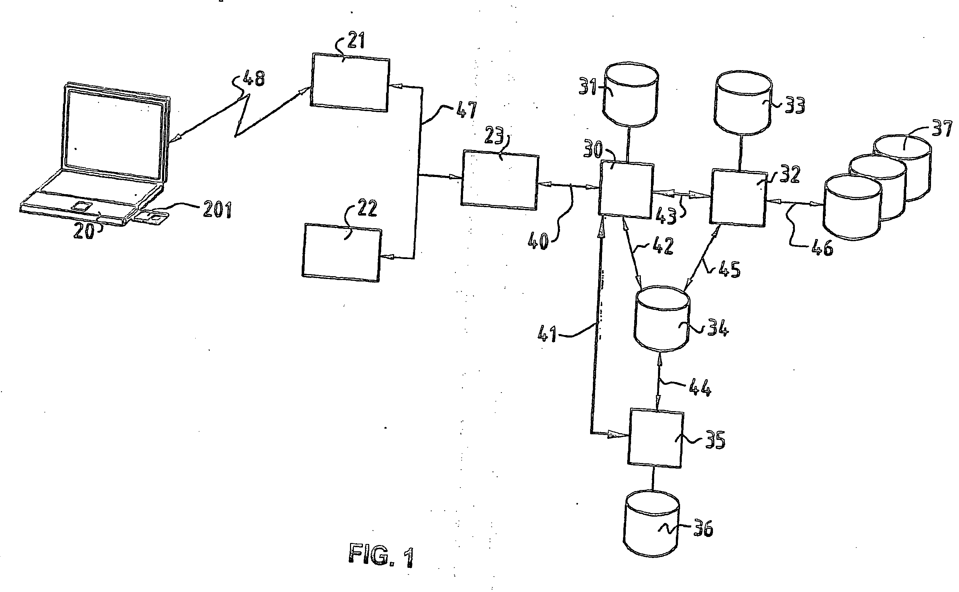

Figur 1 zeigt ein Blockdiagramm, welches schematisch ein erfindungsgemässes Verfahren und eine System für automatisches Roaming zwischen heterogenen WLANs und/oder GSM/GPRS/UMTS-Netzwerken illustriert, wobei mobile IP-Nodes 20 über eine kontaktbehaftete Schnittstelle mit einer SIM-Karte 201 und/oder ESIM (Electronic SIM) verbunden sind und mittels einer drahtlosen Verbindung 48 auf Access Points 21/22 des WLAN zugreifen. Ein Access Server 23 des WLAN authentifiziert den mobilen IP-Node 20 basierend auf einer auf der SIM-Karte 201 abgespeicherten IMSI bei einem HLR 37 und/oder VLR 37 eines GSM Mobilfunknetzes.

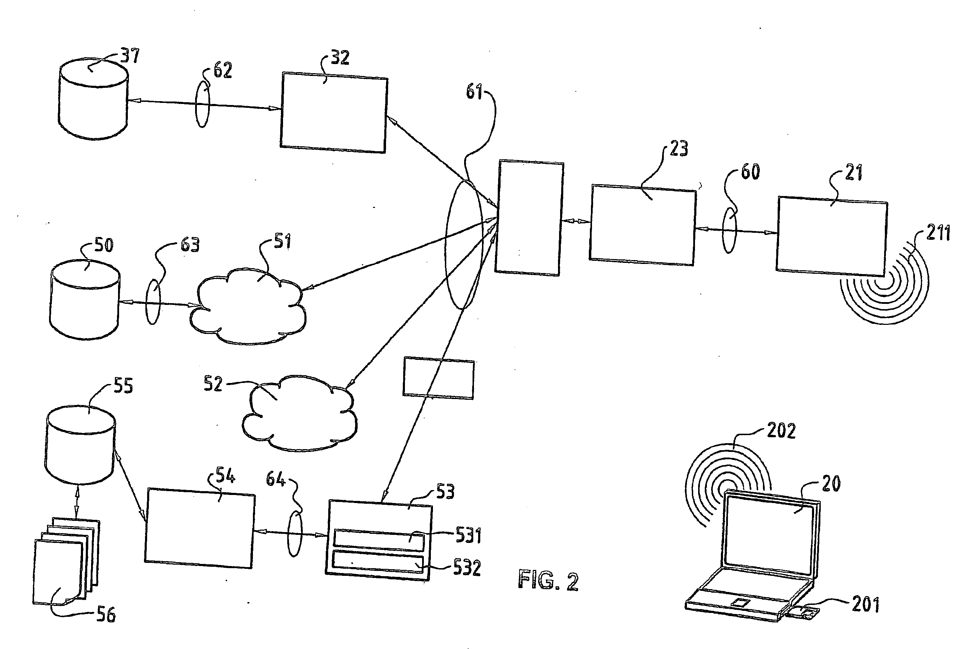

Figur 2 zeigt ein Blockdiagramm, welches schematisch ebenfalls ein erfindungsgemässes Verfahren und eine System für automatisches Roaming zwischen heterogenen WLANs und/oder GSM/GPRS/UMTS-Netzwerken illustriert, wobei mobile IP-Nodes 20 über eine kontaktbehaftete Schnittstelle mit einer SIM-Karte 201 verbunden sind und mittels einer drahtlose Verbindung 48 auf ein WLAN zugreifen. Das WLAN ist über einen Access Server 23 mit einem GSM Mobilfunknetz, insbesondere einem HLR 37 und/oder VLR 37, einem GGSN (Gateway GPRS Support Node) 50 über ein GRX-Modul 51 (GRX: GPRS Roaming eXchange), einen Internet Service Provider 52 und einen Clearing Provider 53 für das Clearing der beanspruchten Leistungen über einen Clearing System Operator 54 mit dem entsprechenden Billing-System 55 des Internet Service Providers 52 verbunden. Die Referenznummern 60-64 sind bidirektionale Netzwerkverbindungen.

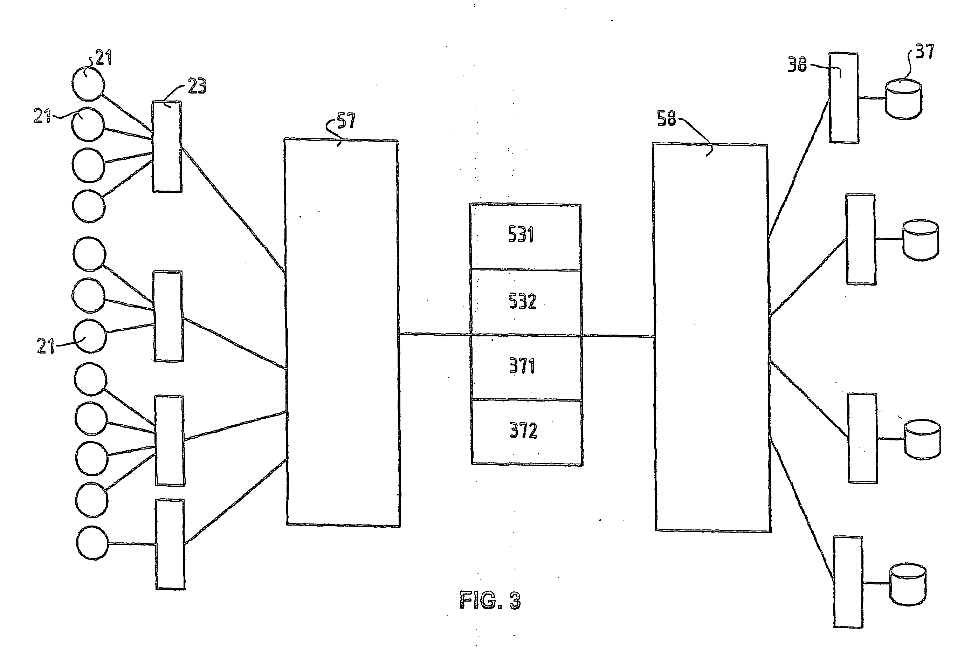

Figur 3 zeigt ein Blockdiagramm, welches schematisch ein Verfahren und eine System für automatisches Roaming zwischen heterogenen WLANs und/oder GSM/GPRS/UMTS-Netzwerken illustriert, wobei die offene IP-Welt mittels dem erfindungsgemässen Verfahren und System über Schnittstellen der Authentifizierung 371 und Autorisierung 372 (SS7/MAP), Service Autorisierung 531 und Billing 532 mit der restriktiveren GSM-Welt verbunden sind.

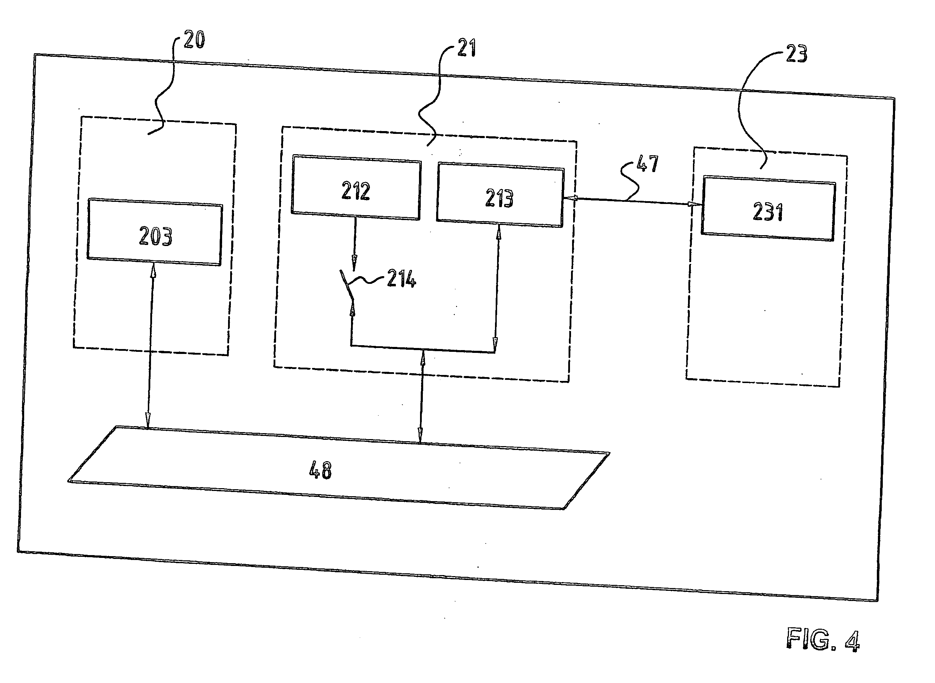

Figur 4 zeigt ein Blockdiagramm, welches schematisch den Aufbau eines IEEE 802.1x Port-basierendes Authentifikationsverfahren illustriert, wobei der Supplicant oder Remote Access Client 20 über ein Authenticator oder Remote Access Server 21 bei einem Authentifikations-Server 23 authentifiziert wird, wobei das WLAN auf IEEE 802.11 basiert.

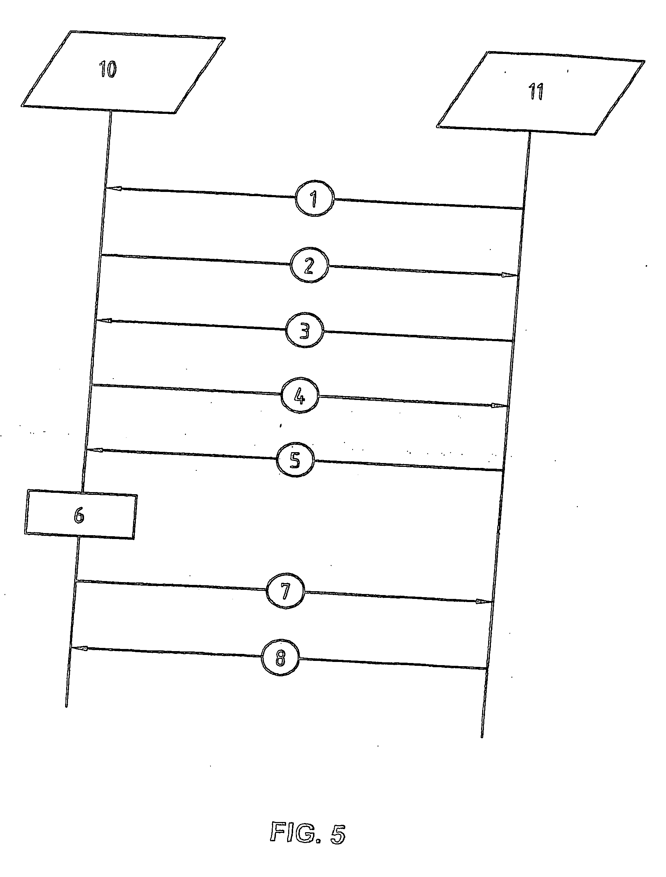

Figur 5 zeigt ein Blockdiagramm, welches schematisch eine mögliche Ausführungsvariante zur SIM-Authentifizierung mittels Extensible Authentification Protocol (EAP) illustriert, wobei ein GSM basiertes Challenge-Response Verfahren verwendet wird.

Figur 1 illustriert eine Architektur, die zur Realisierung der Erfindung verwendet werden kann. Figur 1 zeigt ein Blockdiagramm, welches schematisch ein erfindungsgemässes Verfahren und ein System für automatisches Roaming zwischen heterogenen WLANs und/oder GSM/GPRS/UMTS-Netzwerken illustriert. In der Figur 1 bezieht sich das Bezugszeichen 20 auf einen mobile IP-Node, welcher über die notwendige Infrastruktur, einschliesslich Hardware- und Softwarekomponenten verfügt, um ein beschriebenes erfindungsgemässes Verfahren und/oder System zu realisieren. Unter mobile Nodes 20 sind u.a. alle möglichen sog. Customer Premise Equipment (CPE) zu verstehen, die zur Benutzung an verschiedenen Netzwerkstandorten und/oder verschiedenen Netzwerken vorgesehen sind. Diese umfassen beispielsweise sämtlich IP-fähigen Geräte wie z.B. PDAs, Mobilfunktelefone und Laptops. Die mobilen CPEs oder Nodes 20 besitzen ein oder mehrere verschiedene physikalische Netzwerkschnittstellen, die auch mehrere unterschiedliche Netzwerkstandards unterstützen können. Die physikalischen Netzwerkschnittstellen des mobilen Nodes können z.B. Schnittstellen zu WLAN (Wireless Local Area Network), Bluetooth, GSM (Global System for Mobile Communication), GPRS (Generalized Packet Radio Service), USSD (Unstructured Supplementary Services Data), UMTS (Universal Mobile Telecommunications System) und/oder Ethernet oder einem anderen Wired LAN (Local Area Network) etc. umfassen. Die Referenznummer 48 steht dementsprechend für die verschiedenen heterogenen Netzwerke, wie z.B. ein Bluetooth-Netzwerk, z.B. für Installationen in überdachten Örtlichkeiten, ein Mobilfunknetz mit GSM und/oder UMTS etc., ein Wireless LAN z.B. basierend auf IEEE wireless 802.1x, aber auch einem Wired LAN, d.h. einem lokalen Festnetz, insbesondere auch dem PSTN (Public Switched Telephone Network) etc.. Prinzipiell ist zu sagen, dass das erfindungsgemässe Verfahren und/oder System nicht an einen spezifischen Netzwerkstandart gebunden ist, sofern die erfindungsgemässen Merkmale vorhanden sind, sondern können mit einem beliebigen LAN realisiert werden. Die Schnittstellen 202 des mobilen IP-Nodes können nicht nur packet-switched Schnittstellen, wie sie von Netzwerkprotokollen wie z.B. Ethernet oder Tokenring direkt benutzt werden, sondern auch circuit-switched Schnittstellen, die mittels Protokollen wie z.B. PPP (Point to Point Protocol), SLIP (Serial Line Internet Protocol) oder GPRS (Generalized Packet Radio Service) benutzt werden können, d.h. welche Schnittstellen z.B. keine Netzwerkadresse wie eine MAC- oder eine DLC-Adresse besitzen. Wie teilweise erwähnt, kann die Kommunikation über das LAN, beispielsweise mittels speziellen Kurzmeldungen, z.B. SMS (Short Message Services), EMS (Enhanced Message Services), über einen Signalisierungskanal, wie z.B. USSD (Unstructured Supplementary Services Data) oder andere Techniken, wie MExE (Mobile Execution Environment), GPRS (Generalized Packet Radio Service), WAP (Wireless Application Protocol) oder UMTS (Universal Mobile Telecommunications System) oder über IEEE wireless 802.1x oder einen anderen Nutzkanal erfolgen. Der mobile IP-Node 20 kann ein Mobile IP-Modul und/oder ein IPsec-Modul umfassen. Die Hauptaufgabe des Mobile IP besteht darin, den mobilen IP-Node 20 im IP-Netzwerk zu authentifizieren und die IP-Pakete, die den mobilen Node 20 als Zieladresse haben, entsprechend umzuleiten. Zu den weiteren Mobile IP Spezifikationen siehe z.B. auch IETF (Internet Engineering Task Force) RFC 2002, IEEE Comm. Vol. 35 No. 5 1997 etc. Mobile IP unterstützt insbesondere lPv6 und lPv4. Die Mobile IP Fähigkeiten können vorzugsweise mit den Sicherheitsmechanismen eines IPsec (IP security protocol)-Moduls kombiniert werden, um ein sicheres mobiles Datenmanagement im öffentlichen Internet zu garantieren. IPsec (IP security protocol) erzeugt paketweise oder socketweise Authentifikations-/Vertraulichkeitsmechanismen zwischen Netzwerkknoten, die beide IPsec benutzen. Eine der Flexibilitäten von IPsec liegt insbesondere darin, dass es sich paketweise aber auch für einzelne Sockets konfigurieren lässt. IPsec unterstützt IPvx, insbesondere IPv6 und IPv4. Für detailliertere IPsec-Spezifikationen siehe z.B. Pete Loshin: IP Security Architecture; Morgan Kaufmann Publishers; 11/1999 oder A Technical Guide to IPsec; James S et al.; CRC Press, LLC; 12/2000 etc. Obwohl lPsec bei dieserri Ausführungsbeispiel als Beispiel für die Verwendung von Sicherheitsprotokollen auf IP-Niveau beschrieben worden ist, sind alle möglichen anderen Sicherheitsprotokolle oder -mechanismen oder gar das Weglassen von Sicherheitsprotokollen erfindungsgemäss vorstellbar.

Weiter ist der mobile IP-Node 20 über eine kontaktbehaftete Schnittstelle mit einer SIM-Karte 201 (SIM: Subscriber Identity Module) verbunden, auf welcher eine IMSI (International Mobile Subscriber Identifier) eines Benutzers von GSM-Netzwerken abgespeichert ist. Das SIM kann sowohl hardwaremässig als SIM-Karte und/oder softwaremässig als elektronische SIM realisiert sein. Zur Authentifizierung fordert der mobiler IP-Node 20 über eine drahtlose Schnittstelle 202 innerhalb einer Basic Service Area eines WLANs bei einem Access Point 21/22 Zugriff auf das WLAN. Wie bereits beschrieben, können die verschiedenen WLANs unterschiedlicher Hot Spots heterogene Netzwerkstandards und -protokolle umfassen, wie z.B. WLAN basierend auf dem IEEE wireless 802.1x, Bluetooth etc.. Die Basic Service Area des WLAN umfasst ein oder mehrere einem Access Server 23 zugeordnete Access Points 21/22. Der mobile IP-Node 20 übermittelt auf einen Request des Access Servers 23 eine auf der SIM-Karte 201 des mobilen IP-Nodes 20 gespeicherte IMSI an den Access Server 23. Die IMSI des mobilen IP-Nodes 20 wird mittels eines SIM-RADIUS-Moduls 30 gespeichert. Basierend auf der IMSI wird mittels von in einer SIM-Benutzerdatenbank 34 abgespeicherten Informationen der logischen IP-Datenkanal des WLAN zu entsprechenden GSM-Daten für Signal-und Datenkanäle eines GSM-Netzwerkes benutzerspezifisch ergänzt. Das GSM System umfasst Datenkanäle, die sog. Traffic Channels, und Kontrolsignalkanäle, sog. Signaling Channels. Die Traffic Channeles (z.B. GPRS, GSM-Voice, GSM-Daten etc.) sind für Benutzerdaten reserviert, während die Signaling Channels (z.B. MAP, SS7 etc.) für Netzwerk-Managment, Kontrollfunktionen etc. verwendet werden. Die logischen Kanäle sind über die Schnittstelle nicht alle gleichzeitig benutzbar, sondern anhand der GSM-Spezifikationen nur in bestimmten Kombinationen. Mittels eines SIM-Gateway-Moduls 32 werden zur Durchführung der Authentifizierung des IP-Nodes basierend auf den GSM-Daten die notwendigen SS7/MAP-Funktionen (Authentifikation und/oder Autorisation und/oder Konfigurationsinformationen) generiert, wobei das SIM-RADIUS-Moduls 30 mittels SIM-Benutzerdatenbank 34 und SIM-Gateway-Moduls 32 die Authentifizierung des mobilen IP-Nodes basierend auf der IMSI der SIM-Karte 201 des mobilen Nodes 20 bei einem HLR 37 (Home Location Register) und/oder VLR 37 (Visitor Location Register) eines GSM-Netzwerkes durchführt. Bei erfolgreicher Authentifizierung kann als Ausführungsvariante zusätzlich zum Location Update beim HLR (37) und/oder VLR 37 eine Autorisierung des mobilen IP-Nodes 20 durchgeführt werden, wobei beim HLR 37 und/oder VLR 37 ein entsprechendes Benutzerprofil basierend auf der IMSI heruntergelanden wird. Es ist auch vorstellbar, dass für die Authentifizierung des mobilen IP-Nodes 20 nur bei einem oder mehreren der ersten Authentifikationsschritte die auf der SIM-Karte des mobilen IP-Nodes 20 gespeicherte IMSI benutzt wird und bei allen weiteren Authentifikationsschritten die IMSI durch eine generierte temporäre IMSI (TIMSI) ersetzt wird. Für das Billing können die Billing-Records der heterogenen WLANs mit den Benutzerdaten (IMSI/TIMSI) mittels eines Clearing-Modul 533 synchronisiert werden und entsprechend aufbereitet werden, so dass diese z.B. im GSM-Standard TAP (Transferred Account Procedure), insbesondere im TAP-3 Standard, von Mobilfunkdienstanbietern ohne Anpassung ihres Billingsystems für die Weiterverwendung an ihre Kunden übernommen werden können. Die Transferred Account Procedure ist ein Protokoll für die Abrechnung zwischen verschiedenen Netzbetreibern, wobei die Version 3 (TAP-3) auch das Billing von Value Added Services in GPRS beherrscht.

Wie in Figur 5 illustriert, kann die Authentifizierung des mobilen IP-Nodes 20 z.B. mittels Extensible Authentication Protocol durchgeführt werden. Für das EAP-basierende Verfahren zur Authentifizierung eines Benutzers und zur Vergabe von Sessions Keys an den Benutzer mittels des GSM Subscriber Identity Modul (SIM) kann z.B. folgendes Challenge-Response Verfahren verwendet werden. Dem Authentifikationsalgorithmus der SIM-Karte wird als Challenge (Frage) eine 128-bit Zufallszahl (RAND) gegeben. Auf der SIM-Karte läuft dann ein für den jeweiligen Operator spezifischer, vertraulicher Algorithmus, der als Input die Zufallszahl RAND und einen geheimen, auf der SIM-Karte gespeicherten Schlüssel Ki erhält und daraus eine 32-bit Antwort (SRES) und ein 64-bit Schlüssel Kc generiert. Kc dient zur Verschlüsselung des Datentransfers über drahtlose Schnittstellen (GSM Technical Specification GSM 03.20 (ETS 300 534): "Digital cellular telecommunication system (Phase 2); Security related network functions", European Telecommunications Standards Institute, August 1997). Zur Authentifizierung werden mehrere RAND Challenge zum Generieren von mehreren 64-bit Kc Schlüsseln verwendet. Diese Kc-Schlüssel werden zu einem längeren Session Key kombiniert. Figur 4 zeigt schematisch den Aufbau zwischen dem mobilen IP-Node 20, dem Access Point 21 und dem Access Server 23 in einem IEEE 802.1x Port-basierenden Authentifikationsverfahren, wobei der mobile IP-Node 20 (Remote Access Client / Supplicant) über den Access Point 21 (Authenticator) beim Access Server 23 (Authentifikations-Server) authentifiziert wird. Das WLAN basiert in diesem Ausführungsbeispiel auf IEEE 802.11. Um die GSM-Authentifikation durchzuführen, fungiert das SIM-Gateway-Modul 32 als Gateway zwischen Internet Authentification Service (IAS) Server Netzwerk und der GSM Authentifikationsinfrastruktur, d.h. dem Access Point 21/22 bzw. dem Access Server 23 und dem HLR 37 bzw. dem VLR 37. Zu Beginn der EAP/SIM Authentifizierung verlangt der Access Server 23 mit einem ersten EAP-Request 1 durch den Access Point 21/22 vom mobilen IP-Node 20 u.a. die International Mobile Subscriber Identity (IMSI) des Benutzer. Diese wird vom mobilen IP-Node mittels EAP-Response 2 an den Access Point 21/22 übermittelt. Mit der IMSI erhält der Access Server 23 auf eine Triplet-Anfrage vom entsprechenden HLR 37 bzw. VLR 37 bezeichnet, n GSM Triplets. Basierend auf den Triplets kann der Access Server 23 ein Message Authentification Code für n*RAND und eine Lebensdauer für den Schlüssel (zusammen MAC_RAND) sowie einen Session Schlüssel erhalten. In einem 3. EAP-Schritt 3 (Figur 5) schickt der Access Server 23 dann z.B. einen EAP-Request vom Typ 18 (SIM) an den mobilen IP-Node 20 und erhält die entsprechende EAP-Response 4. EAP-Datenpackete vom Typ SIM haben zusätzlich ein spezielles Subtyp-Feld. Der erste EAP-Request/SIM ist vom Untertype 1 (Start). Dieses Packet enthält die Liste der EAP/SIM Protokoll Versions-Nummern, die durch den Access Server 23 unterstützt werden. Der EAP-Response/SIM (Start) 4 (Figur 5) des mobilen IP-Nodes 20 enthält die vom mobilen IP-Node 20 ausgewählte Versionsnummer. Der mobile IP-Node 20 muss eine der im EAP-Request angegebenen Versionsnummern auswählen. Der EAP-Response/SIM (Start) des mobilen IP-Nodes 20 enthält ebenfalls einen Lebensdauervorschlag für den Schlüssel (Key) und eine Zufallsnummer NONCE_MT, die durch den mobilen IP-Node generiert wurde. Alle folgenden EAP-Requests enthalten alle die gleiche Version wie das EAP-Response/SIM (Start) Datenpacket des mobilen IP-Nodes 20. Wie erwähnt, besitzt diese Ausführungsvariante um die GSM-Authentifikation durchzuführen ein SIM-Gateway-Modul 32, das als Gateway zwischen dem Access Server 23 und dem HLR 37 bzw. dem VLR 37 fungiert. Nach Erhalt der EAP-Response/SIM erhält der Access Server 23 ein n GSM Triplet vom HLR/VLR 37 des GSM-Netzwerkes. Aus den Triplets berechnet der Access Server 23 MAC_RAND und den Session Key K. Die Berechnung der kryptographischen Werte des SIM-generierten Session Key K und der Message Authentification Codes MAC-Rand und MAC_SRES könne beispielsweise dem Dokument "HMAC: Keyed-Hashing for Message Authentification" von H. Krawczyk, M. Bellar und R. Canetti (RFC2104, Feb. 1997) entnommen werden. Der nächste EAP-Request 5 (Figur 5) des Access Servers 23 ist vom Typ SIM und Subtyp Challenge. Der Request 5 enthält die RAND Challenges, die vom Access Server 23 beschlossene Lebensdauer des Schlüssels, ein Message Authentication Code für die Challenges und die Lebenszeit (MAC_RAND). Nach Erhalt des EAP-Request/SIM (Challenge) 5 läuft der GSM-Authentifikationsalgorithmus 6 auf der SIM-Karte und berechnet eine Kopie von MAC_RAND. Der mobile IP-Node 20 kontrolliert, dass der berechnete Wert von MAC_RAND gleich dem erhaltenen Wert von MAC_RAND ist. Ergibt sich keine Übereinstimmung der beiden Werte, bricht der mobile IP-Node 20 das Authentifikationsverfahren ab und schickt keine von der SIM-Karte berechneten Authentifikationswerte an das Netzwerk. Da der Wert RAND zusammen mit dem Message Authentifikations-Code MAC_RAND erhalten wird, kann der mobile IP-Node 20 sicherstellen, dass RAND neu ist und vom GSM-Netzwerk generiert wurde. Sind alle Überprüfungen richtig gewesen, schickt der mobile IP-Node 20 ein EAP-Response/SIM (Challenge) 7, der als Antwort MAC_SRES des mobilen IP-Nodes 20 enthält. Der Access Server 23 überprüft, dass MAC_RES korrekt ist und schickt schliesslich ein EAP-Success Datenpacket 8 (Figur 5), welches dem mobilen IP-Node 20 anzeigt, dass die Authentifizierung erfolgreich war. Der Access Server 23 kann zusätzlich den erhaltenen Session Key mit der Authentifizierungs-Meldung (EAP-Success) an den Access Point 21/22 schicken. Bei erfolgreicher Authentifizierung wird ein Location Update beim HLR 37 und/oder VLR 37 durchgeführt und der mobile IP-Node 20 erhält in einer Customer Database des Access Servers einen entsprechenden Eintrag, wobei das WLAN zur Benutzung durch den mobilen IP-Node 20 freigegeben wird. Wie erwähnt, hat dies u.a. den Vorteil, dass ein automatisches Roaming zwischen unterschiedlichen und heterogenen WLANs möglich wird. Durch das Verbinden der WLAN-Technologie, insbesondere der IP-Netzwerke, mit der GSM-Technologie wird das Roaming des Benutzers möglich, ohne dass er sich um Anmeldung, Billing, Service Autorisation etc. bei den verschiedenen WLAN-Dienstanbletern bemühen müsste, d.h. dass der Benutzer den gleichen Komfort geniesst, wie er es von der Mobilfunktechnologie, wie z.B. GSM, gewohnt ist. Gleichzeitig ist es auf eine völlig neue Art möglich, die Vorteile der offenen IP-Welt (Zugang zum weltweiten Internet etc.) mit den Vorteilen (Sicherheit, Billing, Service Autorisation etc.) zu verbinden. Die Erfindung erlaubt auch ein Verfahren für ein Roaming in WLANs zu erzeugen, ohne dass bei jedem Access Server ein entsprechendes Modul eingebaut werden müsste. Im Gegenteil kann die Infrastruktur (WLAN/GSM) durch die Verwendung von RADIUS unverändert übernommen werden. Die Erfindung ermöglicht dadurch ein automatisches Roaming zwischen heterogenen WLANs, GSM-, GPRS- und UMTS-Netzwerken.

Figur 3 zeigt in einem Blockdiagramm noch einmal schematisch ein erfindungsgemässes Verfahren und System, wie über die Schnittstellen der Authentifizierung 371 und Autorisierung 372 (SS7/MAP); Service Autorisierung 531 und Billing 532 die offene IP-Welt 57 mit der restriktiveren GSM-Welt 58 verbunden sind. Die Referenznummer 38 geben dabei unterschiedliche Mobilfunknetzdienstanbieter mit zugeordneten HLR/VLR 37 an. Als Ausführungsvariante ist es vorstellbar, dass der Datenstrom des mobilen IP-Nodes 20 beim Zugriff auf das WLAN vom Access Point 21/22 über den Mobilfunknetzdienstanbieter 38 geleitet wird. Dies erlaubt dem Mobilfunknetzdienstanbieter 38 basierend auf der Authentifizierung mittels der IMSI benutzerspezifische Service Autorisierung zur Benutzung unterschiedlicher Dienste zu erteilen und/oder benutzerspezifisches Billing der beanspruchten Leistung durchzuführen. Zur Service Autorisierung wird nach der Authentifikation des Benutzers neben den Location Update beim HLR/VLR 37 ein Benutzerprofil (Enduserprofil) heruntergeladen, aus welchem die entsprechenden Angaben zur Service Autorisierung eines Benutzers entnommen werden können. Basierend auf dem Benutzerprofil werden im mobilen IP-Node 20 die entsprechenden Autorisierungsflags zur Freigabe oder Verweigerung bestimmter Dienste gesetzt. Die Servicefreigabe könnte prinzipiell auch z.B. mittels einem Modul 214 direkt beim Access Point 21/22 oder, falls der Datenstrom umgeleitet wird, beim Mobilfunknetzdienstanbieter 38 vorgenommen werden.

Es bleibt zu erwähnen, dass in einem erweiterten Ausführungsbeispiel zum oben genannten Ausführungsbeispiel die SIM-Benutzerdatenbank 34 mit einem Sync-Modul 35 und einer Sync-Datenbank 36 zum Verändern oder Löschen von bestehenden Benutzerdatensätzen oder zum Einfügen neuer Benutzerdatensätze verbunden ist, wobei der Abgleich der Datenbanken 34/36 periodisch durchgeführt wird und/oder durch Veränderungen der Sync-Datenbank 36 und/oder durch Ausfall der SIM-Benutzerdatenbank 34 ausgelöst wird. Das Sync-Modul 35 und die Sync-Datenbank 36 können wie die übrigen erfindungsgemässen Komponenten hardware- oder softwaremässig als eigenständige Netzwerkkomponenten, z.B. als eigenständiger IP-Node und/oder GSM-Komponente oder einer anderen Systemkomponente zugeordnet und/oder in eine andere Systemkomponente integriert realisiert sein. Mit dieser Ausführungsvariante können die Mobilfunknetzbetreiber 38 zum Verändern oder Löschen von bestehenden Benutzerdatensätzen oder zum Einfügen neuer Benutzerdatensätze in gleicher Weise verfahren, wie bisher mit ihren Benützerdatenbanken, dass heisst, ohne dass sie zusätzliche System kaufen oder warten müssten.

## Patentansprüche

1. Verfahren für automatisches Roaming zwischen heterogenen WLANs und/oder GSM/GPRS/UMTS-Netzwerken, bei welchem zur Authentifizierung ein mobiler IP-Node (20) über eine drahtlose Schnittstelle innerhalb einer Basic Service Area eines WLANs bei einem Access Point (21/22) Zugriff auf das WLAN fordert, wobei die Basic Service Area des WLAN ein oder mehrere einem Access Server (23) zugeordnete Access Points (21/22) umfasst, bei welchem der mobile IP-Node (20) auf einen Request des Access Servers (23) eine auf einer SIM-Karte (201) des mobilen IP-Nodes (20) gespeicherte IMSI an den Access Server (23) übermittelt und die IMSI des IP-Nodes (20) in einer Datenbank (31) eines SIM-RADIUS-Moduls (30) gespeichert wird, wobei basierend auf der IMSI mittels von in einer SIM-Benutzerdatenbank (34) abgespeicherten Informationen der logischen IP-Datenkanal des WLAN zu entsprechenden GSM-Daten für Signal- und Datenkanäle eines GSM-Netzwerkes benutzerspezifisch ergänzend hinzugefügt wird, und wobei die Authentifizierung des mobilen IP-Nodes (20) basierend auf der IMSI der SIM-Karte (201), des mobilen Nodes (20) bei einem HLR (37) eines GSM-Netzwerkes durchgeführt, wird, **dadurch gekennzeichnet,**
**dass** mittels eines SIM-Gateway-Moduls (32) zur Durchführung der Authentifizierung des IP-Nodes (20) basierend auf den GSM-Daten die notwendigen SS7/MAP-Funktionen generiert werden, wobei das SIM-Gateway-Modul (32) als Gateway vom WLAN zum HLR (37) ins GSM-Netzwerk fungiert, und wobei das SIM-RADIUS-Modul (30) mittels SIM-Benutzerdatenbank (34) und SIM-Gateway-Modul (32) die Authentifizierung basierend auf der IMSI der SIM-Karte (201) des mobilen Nodes (20) bei dem der IMSI entsprechenden HLR (37) durchführt, und
**dass** bei erfolgreicher Authentifizierung ein Location Update beim HLR (37) durchgeführt wird und der mobile IP-Node (20) in einer Customer Database des Access Servers (23) einen entsprechenden Eintrag erhält, wobei bei erfolgreicher Authentifizierung zusätzlich zum Location Update beim HLR (37) ein entsprechendes Benutzerprofil basierend auf der IMSI heruntergeladen wird und eine Autorisierung des mobilen IP-Nodes (20) durchgeführt wird, wobei zur Autorisierung des Benutzers entsprechende Angaben aus dem Benutzerprofil entnommen werden und die Autorisierung des Benutzers auf der Abfrage des entsprechenden Benutzerprofils beim HLR basiert,
und wobei das WLAN zur Benutzung durch den mobilen IP-Node (20) freigegeben wird.

2. Verfahren für automatisches Roaming zwischen heterogenen WLANs und/oder GSM/GPRS/UMTS-Netzwerken nach Anspruch 1, **dadurch gekennzeichnet, dass** für die Authentifizierung des mobilen IP-Nodes (20) die auf der SIM-Karte des mobilen IP-Nodes (20) gespeicherte IMSI nur bis zu einem oder mehreren der ersten Authentifikationsschritte benutzt wird und bei allen weiteren Authentifikationsschritten die IMSI durch eine generierte temporäre IMSI ersetzt wird.

3. Verfahren für automatisches Roaming zwischen heterogenen WLANs und/oder GSM/GPRS/UMTS-Netzwerken nach einem der Ansprüche 1 oder 2, **dadurch gekennzeichnet, dass** die Authentifizierung des mobilen IP-Nodes (20) mittels Extensible Authentication Protocol durchgeführt wird.

4. Verfahren für automatisches Roaming zwischen heterogenen WLANs und/oder GSM/GPRS/UMTS-Netzwerken nach einem der Ansprüche 1 bis 3, **dadurch gekennzeichnet, dass** die SIM-Benutzerdatenbank (34) mit einem Sync-Modul (35) und einer Sync-Datenbank (36) zum Verändern oder Löschen von bestehenden Benutzerdatensätzen oder zum Einfügen neuer Benutzerdatensätze verbunden ist, wobei der Abgleich der Datenbanken (34/36) periodisch durchgeführt wird und/_oder durch Veränderungen der Sync-Datenbank (36) und/oder durch Ausfall der SIM-Benutzerdatenbank (34) ausgelöst wird.

5. Verfahren für automatisches Roaming zwischen heterogenen WLANs und/oder GSM/GPRS/UMTS-Netzwerken nach einem der Ansprüche 1 bis 4, **dadurch gekennzeichnet, dass** mittels eines Clearing-Moduls (533) für das Billing die Billing-Records der heterogenen WLANs mit den Benutzerdaten synchronisiert und basierend auf dem GSM-Standard TAP aufbereitet werden.

6. System für automatisches Roaming zwischen heterogenen WLANs und/oder GSM/GPRS/UMTS-Netzwerken, welches System mindestens ein WLAN mit jeweils einer Basic Service Area umfasst, welche Basic Service Area eines WLANs einen oder mehrere einem Access Server (23) zugeordnete Access Points (21/22) umfasst, welche Access Points (21/22) eine drahtlose Schnittstelle (211) zum Kommunizieren mit mobilen IP-_Nodes (20) umfassen und welche mobilen IP-_Nodes (20) eine SIM-_Karte (201) zum Speichern einer IMSI umfassen,
wobei der Access Server (23) ein SIM-RADIUS-Modul (30) mit einer Datenbank (31) zum Speichern der IMSI umfasst, wobei basierend auf der IMSI mittels von in einer SIM-Benutzerdatenbank (34) abgespeicherten Informationen der logische IP-Datenkanal des WLAN zu GSM-Daten für Signal- und Datenkanäle eines GSM-Netzwerkes benutzerspezifisch ergänzt wird,
dass der Access Server (23) eine Customer Database umfasst, in welche authentifizierte Benutzer des WLANs mittels dem SIM-RADIUS-Modul (30) eintragbar sind, **gekennzeichnet,**
**durch** ein SIM-Gateway-Modul (32) zum Generieren der notwendigen SS7/MAP-Funktionen basierend auf den GSM-Daten zur Durchführung der Authentifizierung des mobilen IP-Nodes (20), wobei das SIM-Gateway-Modul (32) als Gateway vom WLAN zum HLR (37) ins GSM-Netzwerk fungiert, und wobei das SIM-RADIUS-Modul (30), mittels SIM-Benutzerdatenbank (34) und SIM-Gateway-Modul (32) die Authentifizierung basierend auf der IMSI der SIM-Karte (201) des mobilen Nodes (20) beim dem der IMSI entsprechenden HLR (37) durchführt, und
**durch** Mittel zum Durchführen eines Location Update der IMSI des mobilen IP-Nodes (20) beim HLR (37) bei dem Eintrag in die Customer Database, und durch Mittel zur Durchführung einer Autorisierung des mobilen IP-Nodes (20) mittels eines Benutzerprofils des HLR (37) bei erfolgreicher Authentifizierung zusätzlich zum Location Update.

7. System für automatisches Roaming zwischen heterogenen WLANs und/oder GSM/GPRS/UMTS-Netzwerken nach einem der Ansprüche 9 oder 10, **dadurch gekennzeichnet, dass** für die Authentifizierung des mobilen IP-Nodes (20) bei mindestens einem der Authentifikationsschritte die IMSI durch eine mittels einem Modul generierte temporäre IMSI ersetztbar ist.

8. System für automatisches Roaming zwischen heterogenen WLANs und/oder GSM/GPRS/UMTS-Netzwerken nach einem der Ansprüche 6 oder 7, **dadurch**
**gekennzeichnet, dass** die Authentifizierung des mobilen IP-Nodes (20) mittels Extensible Authentication Protocol durchführbar ist.

9. System für automatisches Roaming zwischen heterogenen WLANs und/oder GSM/GPRS/UMTS-Netzwerken nach einem der Ansprüche 6 bis 8, **dadurch gekennzeichnet, dass** das System eine Sync-Modul (35) mit einer Sync-Datenbank (36) umfasst, mittels welcher die SIM-Benutzerdatenbank (34) zum Verändern oder Löschen von bestehenden Benutzerdatensätzen oder zum Einfügen neuer Benutzerdatensätze verbunden ist, wobei der Abgleich der Datenbanken periodisch durchgeführt wird und/ oder durch Veränderungen der Sync-Datenbank (36) und/oder durch Ausfall der SIM-Benutzerdatenbank (34) ausgelöst wird.

10. System für automatisches Roaming zwischen heterogenen WLANs und/oder GSM/GPRS/UMTS-Netzwerken nach einem der Ansprüche 9 bis 15, **dadurch gekennzeichnet, dass** mittels eines Clearing-Moduls (533) für das Billing die Billing-Records der heterogenen WLANs mit den Benutzerdaten synchronisierbar sind und basierend auf dem GSMStandard TAP aufbereitbar sind.

## Claims

1. Method for automatic roaming between heterogeneous WLANs and/or GSM/GPRS/UMTS networks, in which, for the purpose of authentication, a mobile IP node (20) requests access to a WLAN at an access point (21/22) via a wireless interface within a basic service area of the WLAN, wherein the basic service area of the WLAN comprises one or more access points (21/22) allocated to an access server (23), in which the mobile IP node (20), upon a request by the access server (23), transmits an IMSI stored on a SIM card (201) of the mobile IP node (20) to the access server (23) and the IMSI of the IP node (20) is stored in a database (31) of a SIM RADIUS module (30), wherein on the basis of the IMSI, the logical IP data channel of the WLAN is user-specifically supplemented with corresponding GSM data for signal and data channels of a GSM network by means of information stored in a SIM user database (34), and wherein, on the basis of the IMSI of the SIM card (201) of the mobile node (20), the authentication of the mobile IP node (20) is performed at an HLR (37) of a GSM network, **characterized in that**,
the necessary SS7/MAP functions are generated on the basis of the GSM data by means of a SIM gateway module (32) for carrying out the authentication of the IP node (20), wherein the SIM gateway module (32) acts as gateway from the WLAN to the HLR (37) in the GSM network, and wherein the SIM RADIUS module (30) performs the authentication on the basis of the IMSI of the SIM card (201) of the mobile node (20) at the HLR (37) corresponding to the IMSI by means of SIM user database (34) and SIM gateway module (32), and
that, in the case of a successful authentication, a location update is performed at the HLR (37) and the mobile IP node (20) receives a corresponding entry in a customer database of the access server (23), wherein in the case of a successful authentication, in addition to the location update a corresponding user profile based on the IMSI is downloaded at the HLR (37) and an authorization of the mobile IP node (20) is performed, wherein the corresponding information with respect to the service authorization of a user can be found in the user profile and the service authorization of the user is based on the interrogation of the corresponding user profile at the HLR (37), and wherein the WLAN is released for use by the mobile IP node (20).

2. Method for automatic roaming between heterogeneous WLANs and/or GSM/GPRS/UMTS networks according to Claim 1, **characterized in that**, for the authentication of the mobile IP node (20), the IMSI stored on the SIM card of the mobile IP node (20) is only used up to one or more of the first authentication steps and in all other authentication steps, the IMSI is replaced by a generated temporary IMSI.

3. Method for automatic roaming between heterogeneous WLANs and/or GSM/GPRS/UMTS networks according to one of Claims 1 or 2, **characterized in that** the authentication of the mobile IP node (20) is performed by means of extensible authentication protocol.

4. Method for automatic roaming between heterogeneous WLANs and/or GSM/GPRS/UMTS networks according to one of Claims 1 to 3, **characterized in that** the SIM user database (34) is linked to a sync module (35) and a sync database (36) for changing or deleting existing user records or for inserting new user records, wherein the adjustment of the databases (34/36) is performed periodically and/or triggered by changes in the sync database (36) and/or by failure of the SIM user database (34).

5. Method for automatic roaming between heterogeneous WLANs and/or GSM/GPRS/UMTS networks according to one of Claims 1 to 4, **characterized in that** the billing records of the heterogeneous WLANs are synchronized with the user data and processed on the basis of the GSM standard TAP by means of a clearing module (533) for the billing.

6. System for automatic roaming between heterogeneous WLANs and/or GSM/GPRS/UMTS networks, which comprises at least one WLAN having in each case one basic service area which comprises one or more access points (21/22) allocated to an access server (23), which access points (21/22) comprise a wireless interface (211) for communicating with mobile IP nodes (20) and which mobile IP nodes (20) comprise a SIM card (201) for storing an IMSI, wherein the access server (23) comprises a SIM RADIUS module (30) with a database (31) for storing the IMSI, wherein the logical IP data channel of the WLAN is supplemented user-specifically with GSM data for signal and data channels of a GSM network by means of information stored in a SIM user database (34) on the basis of the IMSI, and wherein [sic that] the access server (23) comprises a customer database in which authenticated users of the WLAN are entered by means of the SIM RADIUS module (30), **characterized in that**
the system comprises a SIM gateway module (32) by means of which the necessary SS7/MAP functions are generated on the basis of the GSM data for performing the authentication of the mobile IP node (20), wherein the SIM gateway module (32) acts as gateway from the WLAN to the HLR (37) in the GSM network, and wherein the SIM RADIUS module (30) performs the authentication on the basis of the IMSI of the SIM card (201) of the mobile node (20) at the HLR (37) corresponding to the IMSI by means of SIM user database (34) and SIM gateway module (32), and
that the system comprises means for performing a location update of the IMSI of the mobile IP node (20 at the HLR (37) during the entry in the customer database and means for performing an authorization of the mobile IP node (20), in addition to the location update, by means of a user profile of the HLR (37).

7. System for automatic roaming between heterogeneous WLANs and/or GSM/GPRS/UMTS networks according to Claim 6, **characterized in that** the IMSI is replaced by a temporary IMSI generated by means of a module in at least one of the authentication steps for the authentication of the mobile IP node (20).

8. System for automatic roaming between heterogeneous WLANs and/or GSM/GPRS/UMTS networks according to one of Claims 6 or 7, **characterized in that** the authentication of the mobile IP node (20) is performed by means of Extensible Authentication Protocol.

9. System for automatic roaming between heterogeneous WLANs and/or GSM/GPRS/UMTS networks according to one of Claims 6 to 8, **characterized in that** the system comprises a sync module (35) with a sync database (36), by means of which the SIM user database (34) is connected for changing or deleting existing user records or for inserting new user records, wherein the adjustment of the databases is performed periodically and/or triggered by changes in the sync database (36) and/or by failure of the SIM user database (34).

10. System for automatic roaming between heterogeneous WLANs and/or GSM/GPRS/UMTS networks according to one of Claims 6 to 9, **characterized in that** the billing records of the heterogeneous WLANs is synchronized with the user data, and processed on the basis of the GSM standard TAP, by means of a clearing module (533) for the billing.

## Revendications

1. Procédé pour l'itinérance automatique entre des WLANs hétérogènes et/ou des réseaux GSM/GPRS/UMTS, où pour l'authentification un noeud IP mobile (20) demande l'accès au WLAN à un point d'accès (21/22) par une interface sans fil à l'intérieur d'une Basic Service Area d'un WLAN, où la Basic Service Area du WLAN comprend un ou plusieurs points d'accès (21/22) affectés à un serveur d'accès (23), où le noeud IP mobile (20) transmet au serveur d'accès (23) sur demande du serveur d'accès (23) un IMSI qui est sauvegardé sur une carte SIM (201) du noeud IP mobile (20) et où l'IMSI du noeud IP (20) est sauvegardé dans une base de données (31) d'un module SIM-RADIUS (30), où le canal de données IP logique du WLAN est complété, de manière spécifique à l'utilisateur, basé sur l'IMSI au moyen d'informations sauvegardées dans une base de données d'utilisateurs SIM (34), en des données GSM correspondantes pour des canaux de signaux et de données d'un réseau GSM, et où l'authentification du noeud IP mobile (20) est réalise en se basant sur l'IMSI de la carte SIM (201) du noeud mobile (20) dans un HLR (37) d'un réseau GSM, **caractérisé**
**en ce qu'**au moyen d'un module SIM-Gateway (32) pour la réalisation de l'authentification du noeud IP (20) sont générées les fonctions SS7/MAP nécessaires, en se basant sur les données GSM, où le module SIM-Gateway 32 fonctionne comme Gateway entre le WLAN et le HLR 37 du réseau GSM, et où le module SIM-RADIUS (30) réalise l'authentification du noeud IP mobile (20), au moyen d'une base de données d'utilisateurs SIM (34) et du module SIM-Gateway (32), en se basant sur l'IMSI de la carte SIM (201) du noeud mobile (20), dans le HLR (37) correspondant l'IMSI, et
**en ce que** lors d'une authentification réussie est réalisé un Location Update dans le HLR (37) et que le noeud IP mobile (20) reçoit un enregistrement correspondant dans une Customer Database du serveur d'accès (23), où lors d'une authentification réussie est réalisée une autorisation du noeud IP mobile (20), en plus du Location Update dans le HLR (37), où est téléchargé un profil d'utilisateur correspondant basé sur l'IMSI dans le HLR (37), où les données correspondantes pour l'autorisation de services d'un utilisateur sont extraits du profil d'utilisateur et l'autorisation de services de l'utilisateur est basée sur l'interrogation du profil d'utilisateur correspondant dans le HLR, et où le WLAN est débloqué pour l'utilisation par le noeud IP mobile (20).

2. Procédé pour l'itinérance automatique entre des WLANs hétérogènes et/ ou des réseaux GSM/GPRS/UMTS selon la revendication 1, **caractérisé en ce que** pour l'authentification du noeud IP mobile (20) l'IMSI qui est sauvegardé sur la carte SIM du noeud IP mobile (20) est seulement utilisé jusqu'à une ou plusieurs des premières étapes d'authentification et que l'IMSI est remplacé par un IMSI temporaire généré pour toutes les autres étapes d'authentification.

3. Procédé pour l'itinérance automatique entre des WLANs hétérogènes et/ ou des réseaux GSM/GPRS/UMTS selon l'une quelconque des revendications 1 ou 2, **caractérisé en ce que** l'authentification du noeud IP mobile (20) est réalisée au moyen d'un Extensible Authentication Protocol.

4. Procédé pour l'itinérance automatique entre des WLANs hétérogènes et/ ou des réseaux GSM/GPRS/UMTS selon l'une quelconque des revendications 1 à 3, **caractérisé en ce que** la base de données d'utilisateurs SIM (34) est reliée avec un module Sync (35) et une base de données Sync (36) pour modifier ou supprimer des enregistrements de données d'utilisateurs existants ou pour insérer de nouveaux enregistrements de données d'utilisateur, où l'alignement des bases de données (34/36) est réalisé périodiquement et/ ou est déclenché par des modifications dans la base de données Sync (36) et/ ou par la défaillance de la base de données d'utilisateurs SIM (34).

5. Procédé pour l'itinérance automatique entre des WLANs hétérogènes et/ ou des réseaux GSM/GPRS/UMTS selon l'une quelconque des revendications 1 à 4, **caractérisé en ce qu'**au moyen d'un module de Clearing 533, les Billing-Records (enregistrements de facturation) des WLANs hétérogènes sont synchronisés avec les données d'utilisateurs et sont traités en se basant sur le TAP GSM-Standard pour la facturation.

6. Système pour l'itinérance automatique entre des WLANs hétérogènes et/ ou des réseaux GSM/GPRS/UMTS, où ledit système comprend au moins un WLAN avec à chaque fois une Basic Service Area, où ladite Basic Service Area d'un WLAN comprend un ou plusieurs points d'accès (21/22) affectés à un serveur d'accès (23), où lesdits points d'accès (21/22) comprennent une interface sans fil (211) pour la communication avec des noeuds IP mobiles (20) et où lesdits noeuds IP mobiles (20) comprennent une carte SIM (201) pour la sauvegarde d'un IMSI,
où le serveur d'accès (23) comprend un module SIM-RADIUS (30) avec une base de données (31) pour sauvegarder l'IMSI, où basé sur l'IMSI au moyen d'informations sauvegardées dans une base de données d'utilisateurs SIM (34), le canal de données IP logique du WLAN est complété, de manière spécifique à l'utilisateur, en des données GSM pour les canaux de signaux et de données d'un réseau GSM, et
où le serveur d'accès (23) comprend une Customer Database, dans laquelle des utilisateurs authentifiés du WLAN peuvent être enregistrés au moyen du module SIM-RADIUS (30), **caractérisé**
**en ce que** le système comprend un module SIM-Gateway (32), avec lequel les fonctions SS7/MAP nécessaires peuvent être générées, en se basant sur les données GSM, pour la réalisation de l'authentification du noeud IP mobile (20), où le module SIM-Gateway 32 fonctionne comme Gateway entre le WLAN et le HLR 37 du réseau GSM, et où l'authentification du noeud IP mobile (20) peut être réalisé avec le module SIM-RADIUS (30), au moyen d'une base de données d'utilisateurs SIM (34) et du module SIM-Gateway (32), en se basant sur l'IMSI de la carte SIM (201) du noeud mobile (20), dans le HLR (37) correspondant l'IMSI, et
**en ce qu'** un Location Update de l'IMSI du noeud IP mobile (20) est réalisé dans le HLR (37) lors de l'enregistrement dans la Customer Database, et une autorisation du noeud IP mobile (20) peut être réalisée en plus du Location Update, au moyen d'un profil d'utilisateur du HLR (37), lors d'une authentification réussie.

7. Système pour l'itinérance automatique entre des WLANs hétérogènes et/ ou des réseaux GSM/GPRS/UMTS selon la revendication 6, **caractérisé en ce que** pour l'authentification du noeud IP mobile (20) l'IMSI peut être remplacé par un IMSI temporaire, généré au moyen d'un module, dans au moins une des étapes de l'authentification.

8. Système pour l'itinérance automatique entre des WLANs hétérogènes et/ ou des réseaux GSM/GPRS/UMTS selon l'une quelconque des revendications 6 ou 7, **caractérisé en ce que** l'authentification du noeud IP mobile (20) peut être réalisée au moyen d'un Extensible Authentication Protocol.

9. Système pour l'itinérance automatique entre des WLANs hétérogènes et/ ou des réseaux GSM/GPRS/UMTS selon l'une quelconque des revendications 6 à 8, **caractérisé en ce que** le système comprend un module Sync (35) avec une base de données Sync (36), avec laquelle est liée la base de données d'utilisateurs SIM (34) pour modifier ou supprimer des enregistrements de données d'utilisateurs existantes ou pour insérer des nouveaux enregistrements de données d'utilisateurs, où l'alignement des bases de données est réalisé périodiquement et/ ou est déclenché par des modifications dans la base de données Sync (36) et/ ou par la défaillance de la base de données d'utilisateurs SIM (34).

10. Système pour l'itinérance automatique entre des WLANs hétérogènes et/ ou des réseaux GSM/GPRS/UMTS selon l'une quelconque des revendications 6 à 9, **caractérisé en ce qu'**au moyen d'un module de Clearing (533), les Billing-Records des WLANs hétérogènes peuvent être synchronisés avec les données d'utilisateurs et peuvent être traités en se basant sur le TAP GSM-Standard, pour la facturation.
